# EUROPEAN PATENT APPLICATION

(11) **EP 1 034 922 A1**
(43) Date of publication of application: **13.09.2000**
(21) Application number: 99200771.6
(22) Date of filing: 11.03.1999
(51) Int. Cl.: B32B 27/32, B41M 3/14, B42D 15/10

(54) **A security document comprising a barrier layer**

(71) Applicant: AGFA-GEVAERT N.V., 2640 Mortsel (BE)
(72) Inventor: Vermeulen, Leo c/o Agfa-Gevaert N.V., 2640 Mortsel (BE); Boulonne, Michel c/o Agfa-Gevaert N.V., 2640 Mortsel (BE); Wouters, Walther c/o Agfa-Gevaert N.V., 2640 Mortsel (BE); Vertruyen, Diane c/o Agfa-Gevaert N.V., 2640 Mortsel (BE)

(57) **Abstract**

According to the present invention there is provided a laminating element comprising a transparent support, a layer comprising polyethylene and an adhesive layer, characterized in that between said polyethylene comprising layer and said adhesive layer a barrier layer is present.

## Description

### FIELD OF THE INVENTION

The present invention relates to a security laminate that is thermally non reversible

### BACKGROUND OF THE INVENTION

Security documents that must be verifiable on their authenticity are e.g. all kinds of identification documents such as passports, visas, identity cards, driver licenses, bank cards, credit cards, security entrance cards, and further value-documents such as banknotes, shares, bonds, certificates, cheques, lottery tickets and all kinds of entrance tickets such as airplane tickets and railroad season-tickets.

Said security documents are in many cases made by the lamination of a data containing card. Said laminate can be two-sided when the data containing card is laminated between two laminating elements forming a pouch as in a drivers license.However these laminates are not thermally stable and open at a temperature around 100 °C, facilitating falsification. In order to overcome said problem, diverse adhesive layers were tested but without a satisfying result.

### OBJECTS OF THE INVENTION

It is an object of the present invention to provide a laminated security document whereof the laminate is thermally non reversible. It is a further object of the invention to provide a security document that can hardly be falsified.

### SUMMARY OF THE INVENTION

According to the present invention there is provided a laminating element comprising a transparent support, a layer comprising polyethylene and an adhesive layer, characterized in that between said polyethylene comprising layer and said adhesive layer a barrier layer is present.

### DETAILED DESCRIPTION OF THE INVENTION

According to the invention, said laminate comprises at least four layers.

The first layer consist of a transparent flexible support. The transparent support is preferably a plastic, more preferably a polyester, most preferably polyethylene terephthalate. The thickness of said layer ranges from 30 to 250 µm, preferably 100 µm. Said support is glued on one side, called the inner side to a layer comprising polyethylene. The inner side of the transparent support can be imprinted with various kinds of ink such as UV-inks, optical varying inks, optical varying colors, with colors such as pastel tints. Furtheron, holograms can be used. Suitable holograms are see-through holograms and high index reflective holograms. The image can be obtained by inkjet, by chromapress, by wax printers or laser printers.

According to the invention, said glue can be a two-component polyurethane mixture. Said glue layer has preferably a thickness between 1 and 10 µm, more preferably between 2 and 6 µm.

Said layer comprising an polyethylene can also comprise an ethylene-vinyl acetate copolymer and an ethylene-acrylic acid copolymer and has then a softening point VICAT of 50 to 100 °C. The thickness of said layer ranges preferably from 50 to 200 µm.

On the free side of said last layer is again glued with f.i. a two-component polyurethane glue a barrier layer. Said barrier layer is a transparent plastic layer consisting of polycarbonate, polypropylene or preferably a polyester, most preferably polyethylene terephthalate. Said barrier layer has a thickness between 5 and 35 µm, preferably 12 µm. Said barrier layer is coated on the free side with an adhesive layer. One or both sides of the barrier layer can be imprinted with various kinds of ink such as Winks, optical varying inks, optical varying colors, with colors such as pastel tints. Furtheron, holograms can be used. Suitable holograms are see-through holograms and high index reflective holograms. The image can be obtained by inkjet, by chromapress, by wax printers or laser printers.

The adhesive layer comprises preferably an ethylene-acrylic acid copolymer and a mixture of two polyurethanes. Said copolymer is an ionomer and is preferably brought at a pH between 9 and 13, more preferably at a pH between 10.5 and 11.5 before being coated. Said pH adjustment can be done with alkali such as sodium or potassium hydroxide but preferably at least for a part with a bivalent metal hydroxide such as magnesium hydroxide. Olefines, like ethylene or propylene can be copolymerized with polymerizable carboxylic acids, like acrylic or methacrylic acids. The acid groups are know to promote excellent adhesion to various substrates and give an outstanding toughness, which is maintained at low temperatures. Copolymers are available with (meth)acrylic acid content upto ca. 20%. These copolymers are used in various applications as described in the encyclopedia of polymer science and engineering, volume 6, John Wiley & Sons, 1986. Most frequently used are ethylene-acrylic acid copolymers. Three important changes occur when a small amount of acrylic acid is randomly copolymerized with ethylene, in comparison to a pure polyethylene: 1. The carboxylic groups are free to form bonds and to interact with any polar substrate. Increases in adhesion are essentially proportional to the comonomer content. 2. Carboxylic groups on adjacent chains can hydrogen-bond with each other. This produces thoughness far in excesss of that achieved with conventional LDPE homopolymers having equivalent molecular weight. The thoughness can further be increased when these polymers are converted into ionomers. 3. The bulky carboxyl groups inhibit the ability of the polymer to crystallize. This improves optical clarity and reduces both melting and softening points.

Copolymers which might be used are:

Ethylene-acrylic acid copolymers (EAA-copolymers)), e.g. Primacor 4990, Primacor 5980,trade names of Dow, AC 540, A-C 5120, trade names of Allied Signal Chemicals ect.

Ethylene-methacrylic acid copolymers .

Propylene-acrylic acid copolymers: .

Ethylene-propylene-acrylic acid copolymers

Most frequently used are the methacrylic acid-ethylene and acrylic acid ethylene copolymers

The olefin-(meth)acrylic acid copolymers are often used as an "ionomer". "Ionomer"is a generic term for copolymers of an olefin (ethylene, butadiene, styrene, ect.) with a carboxylic monomer (acrylic acid, methacrylic acid) which have been neutralized, the H+ ions being replaced by other cations (Na+, Zn2+, etc.). Accordingly, the general understanding is that in a medium of low dielectric constant (e.g. hydrocarbon chains) the ions form aggregates. At lower ion contents, the ions aggregate to form multiplets, i.e.. small aggregates (several ion pairs). At higher ion concentrations, many ions along with nonionic material give rise to sizeable clusters which not only act as crosslinks but more like microcrystallites. Well known are the ionomers as produced by DuPont under the tradename Surlyn (e.g. Surlyn ethylene-methacrylic acid copolymer Zn-salts; ethylene-methacrylic acid copolymer sodium-salt), and the AClyn products produced by Allied Signal (e.g. AClyn 295A: ethylene acrylic acid copolymer Zn-salts). The ionic cluster formation and phase segregation have a significant impact on the physical properties of the ionomers. The resulting properties of the ionomers are dependent on the molecular weight, the acrylic acid content, the type of cation, and the degree of neutralization of the base copolymer.

The thermal behaviour of the EAA copolymers and their salts can be explained by means of a three-phase model consisting of a polyethylene crystal phase, a mixed amorphous phase and a micro-phase separated ionic cluster phase as described by W.J. MacKnight (J. Polym. Sci. Symp., No. 46, 83-96 (1974)). The crystallinity of EAA copolymers and ionomers decreases with increasing acrylic acid content. Upon increasing the acrylic acid content a lower crystallinity is obtained as described by R.L. McEvoy (Polymer, vol. 39, 5223-5239 (1998) and by W.J. MacKnight (J. Polym. Sci. Symp., No. 46, 83-96 (1974)). EAA Copolymers with 20% of acrylic acid show no or a only very low crystallinity. Upon higher degree of neutralisation (increased ionization) the mechanical properties improve (increase in ultimate tensile strength and melt flow viscosity) and the main Tg (glass transition temperature) often described as β-relaxation of the ethylene ionomers decreases. When aqueous dispersions of EAA copolymers or ionomers are used also a higher degree of neutralization can be obtained by addition of an aqueous alkali metal hydroxide solution (such as an aqueous NaOH solution). Upon employing a higher pH of the casting solution mechnical properties of the obtained layer are improved. Upon use of multiple charged cations, such as Zn2+, Ca2+, ect., usually higher melt viscosities are obtained.

The copolymer of ethylene-acrylic acid contains preferably between 15 and 25 % acrylic acid, more preferably about 20 % acrylic acid. The Tg of the ethylene-acrylic acid copolymer or of the mixture of said copolymer with the two polyurethanes lies below -17 °C, more preferably below -19 °C

The first polyurethane is preferably an anionic aliphatic polyester, preferably with a viscosity between 400 and 600 mPa.s, more preferably with a viscosity between 450 and 550 mPa.s. The pH of said polyurethane is preferably around 8. The second polyurethane is preferably an aliphatic polyether, preferably with a viscosity Between 250 and 450 mPa.s, more preferably with a viscosity between 300 and 400 mPa.s. The pH of said polyurethane is preferably around 8.

The copolymer ethylene-acrylic acid is preferably present in the adhesive layer in an amount between 4 and 12 g/m2, more preferably in an amount of 7 g/m2. The first polyurethane is prefably present in an amount between 1.7 and 4.4 g/m2, more preferably in an amount of 2.6 g/m2. The second polyurethane is prefably present in an amount between 1.5 and 4.0 g/m2, more preferably in an amount of 2.4 g/m2. The thickness of said layer is preferably between 7.2 and 18 g/m2, more preferably about 12 g/m2.

The ratio of the copolymer ethylene-acrylic acid versus the first or second polyurethane lies preferably between 2 and 5, more preferably between 2.2 and 3.2.

Said laminate is covered with an information bearer. Said information bearer is preferably opaque, but can be transparent. The information is an image or data, f.i. personal data as a signature and a photograph as an image. Said information bearer can be imprinted with various kinds of ink such as UV-inks, optical varying inks, optical varying colors, with colors such as pastel tints. Furtheron, holograms can be used. Suitable holograms are see-through holograms and high index reflective holograms. The image can be obtained by inkjet, by chromapress, by wax printers or laser printers.

Said laminate comprising the information bearer is then laminated to another laminate as described in the art. Preferably said other laminate has the same composition as tbe laminate described above.

The laminate according to the invention is thermally stable up to a temperature above 150°C. At that temperature other layers of the laminate according to the invention or the information bearer or the information on the information bearer are destroyed or deformed so that a security document with a laminate according to the invention is safe for falsification.

### EXAMPLE 1

A standard laminate was composed as follows(a) a transparent polyethylene terephthalate support of 100 µm, (b) a two component polyurethane glue with a thickness of 4 µm, consisting of Liofol UK 3640 ™ and Liofol UK 6800 ™ (c) thereon a polyethylene foil of 75 µm. Thereon was coated a dispersion, adjusted to a pH 11 with sodium hydroxide, with a wet coating thickness of 50 g/m² containing 8 g/m² of ethylene-acrylic acid with 20% acrylic acid, 2.4 g/m² of an anionic aliphatic polyester urethane with a viscosity of 500 mPa.s and 2.2 g/m² of an aliphatic polyether urethane with a viscosity of 350 mPa.s.

A security card was laminated at a temperature of 100 to 110 °C between two such laminates, with the adhesive layers in contact with the security card.

This laminate gave a bad adhesion to the the security card which was digital personalized, when tried to delaminate at high temperature (100 to 160°C).

### EXAMPLE 2

A laminate was prepared in an identical manner as in example 1 with the exception that there was included a 12 µm thick polyethylene terephthalate layer between the polyethylene layer and the adhesive layer. Said polyethylene terephthalate layer was glued with the same glue and at the same thickness as described in example 1 to said polyethylene layer.

A security card was laminated at a temperature of 100 to 110 °C between two such laminates, with the adhesive layers in contact with the security card.

This laminate gave a very good adhesion to the the security card which was digital personalized, when tried to delaminate at high temperature (100 to 160°C). This type of laminate also adhered very good to toner.

### EXAMPLE 3

A laminate was composed as in example 2 with the following exceptions. Between the support and the glue layer was added a holographic image and types of printed security with UV and OVC pigments. Between the glue layer and the barrier layer and between the barrier layer and the adhesive layer are added a holographic image and a type of printed security with UV and OVC pigments.

A security card was laminated at a temperature of 100 to 110 °C between two such laminates, with the adhesive layers in contact with the security card.

This laminate gave a very good adhesion to the the security card which was digital personalized, when tried to delaminate at high temperature (100 to 160°C). This type of laminate also adhered very good to toner.

## Claims

1. A laminating element comprising a transparent support, a layer comprising polyethylene and an adhesive layer, characterized in that between said polyethylene comprising layer and said adhesive layer a barrier layer is present.

2. A laminating element according to claim 1 wherein said support and said polyethylene comprising layer and said polyethylene comprising layer and said barrier layer are glued together with a glue.

3. A laminating element according to claim 2 wherein said glue is a two-component polyurethane glue.

4. A laminate according to any of claims 1 to 3 wherein said adhesive layer comprises an ethylene-acrylic acid copolymer, a first polyurethane polymer, and a second polyurethane polymer.

5. A laminate according to claim 4 wherein said copolymer comprises between 15 and 25 % by weight acrylic acid.

6. A laminate according to claim 4 wherein said copolymer is an ionomer.

7. A laminate according to claim 4 wherein said first polyurethane is an anionic aliphatic polyester.

8. A laminate according to claim 4 wherein said second polyurethane is an aliphatic polyether.

9. A laminate according to any of claims 1 to 8 wherein the barrier layer is a polyester, a polycarbonate or polypropylene.

10. A laminate according to any of claims 1 to 9 wherein said barrier layer has a thickness between 5 and 35 µm.
